# FASCICULE DE BREVET EUROPEEN

(11) **EP 2 235 615 B1**
(45) Date de publication et mention de la délivrance du brevet: **25.07.2012**
(21) Numéro de dépôt: 08873245.8
(22) Date de dépôt: 19.12.2008
(51) Int. Cl.: G06F 3/048, G06F 3/041, G06F 3/047, G06F 1/32

(54) **CIRCUIT ELECTRONIQUE D'ANALYSE A MODULATION DE CARACTERISTIQUES DE BALAYAGE POUR CAPTEUR TACTILE MULTICONTACTS A MATRICE PASSIVE**
ELEKTRONISCHE ANALYSESCHALTUNG MIT MODULATION DER ABTASTEIGENSCHAFTEN FÜR TAKTILEN MEHRKONTAKT-PASSIVMATRIXSENSOR
ELECTRONIC ANALYSIS CIRCUIT WITH MODULATION OF SCANNING CHARACTERISTICS FOR PASSIVE-MATRIX MULTICONTACT TACTILE SENSOR

(30) Priorité: 19.12.2007 FR 0760021
(43) Date de publication de la demande: 06.10.2010
(73) Titulaire: Stantum, 33000 Bordeaux (FR)
(72) Inventeur: JOGUET, Pascal, F-33670 Sadirac (FR); LARGILLIER, Guillaume, F-33100 Bordeaux (FR); OLIVIER, Julien, F-33800 Bordeaux (FR)
(74) Mandataire: Stankoff, Hélène
(86) Numéro de dépôt international: PCT/FR2008/001809
(87) Numéro de publication internationale: WO 2009/112649

(56) Documents cités:
- US-A- 5 149 919
- US-A1- 2003 098 858
- US-A1- 2005 068 044
- US-A1- 2007 138 513
- US-B1- 6 459 424
- US-B1- 6 476 797

## Description

La présente invention concerne un circuit électronique d'analyse à modulation de caractéristiques de balayage pour capteur tactile multicontacts à matrice passive.

La présente invention concerne le domaine des capteurs tactiles transparents multicontacts.

Ce type de capteur est muni de moyens d'acquisition simultanée de la position, la pression, la taille, la forme et le déplacement de plusieurs doigts sur sa surface, afin de commander un équipement, de préférence par l'intermédiaire d'une interface graphique.

Lesdits capteurs peuvent être utilisés, de manière non limitative, en tant qu'interfaces pour des ordinateurs personnels, portables ou non, des téléphones cellulaires, des guichets automatiques (banques, points de ventes, billetterie), des consoles de jeu, des lecteurs multimédia portatifs (baladeurs numériques), du contrôle d'équipements audiovisuels ou électroménagers, du contrôle d'équipements industriels, des navigateurs GPS.

On connaît dans l'état de la technique des capteurs tactiles transparents à capteur multicontacts, permettant de détecter la présence ainsi que l'état de plusieurs points de contact à la fois. Un tel capteur peut être de type matriciel. Une mesure de tension aux bornes de chaque noeud de la matrice est effectuée à cet effet de manière séquentielle et rapide afin de recréer une image du capteur plusieurs fois par seconde.

En vue d'une utilisation pour des applications nécessitant un temps de réaction imperceptible (dactylographie, jeu vidéo, contrôle d'application musicale ou multimédia) de ces capteurs, il est impératif de pouvoir mesurer l'activité d'un doigt avec une latence maximale de 20 millisecondes.

On a proposé dans l'état de la technique une solution décrite dans le brevet FR 2,866,726 visant un dispositif de contrôle par manipulation d'objets graphiques virtuels sur un écran tactile multicontacts. Ledit dispositif comprend en outre un circuit électronique d'analyse permettant d'acquérir et d'analyser les données du capteur avec une fréquence d'échantillonnage de 100 Hz. Le capteur peut être divisée en plusieurs zones afin d'effectuer un traitement parallèle sur lesdites zones.

Le document US 2005/068044 décrit également une telle solution.

L'inconvénient de cette solution réside dans la précision de la mesure par le circuit électronique d'analyse Cette précision dépend directement de la fréquence d'échantillonnage, par conséquent elle est la même sur l'ensemble du capteur, indépendamment d'un contact sur une zone donnée de celle-ci. De même, il est nécessaire d'avoir une résolution de balayage élevée à chaque phase de balayage.

Afin de disposer de mesures suffisamment précises, il est donc nécessaire de mettre en oeuvre des balayages inutiles à fréquence et résolution élevées sur l'ensemble du capteur. Ceci entraîne une forte consommation électrique au niveau de l'écran tactile au sein duquel est intégré le circuit électronique d'analyse. Une telle solution est notamment décrite dans le document US 6 459 424.

On connaît également un circuit de balayage d'un capteur décrit dans le document 2003/098858 qui module le balayage du capteur lors de la détection de plusieurs points de contact, créant une zone d'ambiguïté.

Le but de la présente invention est de proposer un contrôleur électronique pour un capteur tactile multicontacts à matrice passive qui soit adapté pour moduler les caractéristiques de balayage à certaines phases d'acquisition.

Cette modulation peut consister en l'adaptation de la fréquence de balayage de sorte à permettre à la fois un balayage à fréquence basse sur l'ensemble du capteur matriciel et un balayage à fréquence élevée sur une ou plusieurs zones du capteur, selon un asservissement conditionnel et localisé du balayage.

Cette modulation peut aussi consister en l'adaptation de la résolution de balayage du capteur matriciel, c'est-à-dire une résolution basse sur l'ensemble du capteur et une résolution élevée sur une ou plusieurs zones précises du capteur.

L'invention peut aussi consister en une combinaison des deux modes de modulation.

Dans ce but, la présente invention propose un capteur tactile à matrice passive multicontacts, selon la revendication 1.

L'invention offre ainsi une analyse plus rapide et plus sûre avec une consommation électrique optimisée.

Selon un autre mode particulier de réalisation de l'invention:
- l'ensemble de caractéristiques élevées de balayage est fonction des caractéristiques dudit objet graphique,

L'invention permet ainsi une amélioration de la liaison du balayage avec la forme des objets graphiques associés.

L'invention sera mieux comprise à la lecture de la description détaillée d'un exemple non limitatif de réalisation, accompagné de figures annexées représentant respectivement :
- la figure 1, une vue d'un dispositif électronique tactile multicontacts à matrice passive,
- la figure 2, un diagramme du procédé d'acquisition des données sur l'ensemble du capteur, « acquisition 1 », mis en oeuvre par le circuit électronique, selon l'état de la technique antérieure,
- la figure 3, un diagramme du procédé d'analyse des données, « analyse 1 », mis en oeuvre par le circuit électronique, selon l'état de la technique antérieure,
- la figure 4, un diagramme du procédé d'asservissement conditionnel et localisé du balayage du capteur, « asservissement 1 », mis en oeuvre par le circuit électronique, conformément à un example,
- les figures 5 et 6, des vues du capteur matriciel, sur lequel est réalisé un contact,
- la figure 7, un diagramme du procédé d'acquisition des données, « acquisition 2 », mis en oeuvre par le circuit électronique, selon un example,
- la figure 8, un diagramme du procédé d'analyse des données, « analyse 2 », mis en oeuvre par le circuit électronique, selon un example,
- la figure 9, un chronogramme des deux boucles mises en oeuvre lors du procédé d'asservissement conditionnel et localisé,
- la figure 10, une interface utilisateur graphique de type connu , selon la présente invention,
- la figure 11, un diagramme du procédé d'analyse des données, « asservissement 2 », en fonction des différentes zones d'affichage mis en oeuvre par le circuit électronique, selon la présente invention, et
- la figure 12, un chronogramme de différentes boucles mis en oeuvre lors du procédé d'asservissement localisé et conditionné à la définition des différentes zones tactiles.

Un circuit d'analyse électronique conforme à l'invention vise à s'intégrer dans un capteur tactile multicontacts de type matriciel. Il peut s'agir d'une matrice passive, c'est-à-dire composée de deux couches de matériau conducteur transparent arrangé en matrice et séparées par une couche isolante, ou d'une matrice active, pour laquelle chaque noeud de la matrice est constitué d'un composant actif tel qu'un transistor ou une diode.

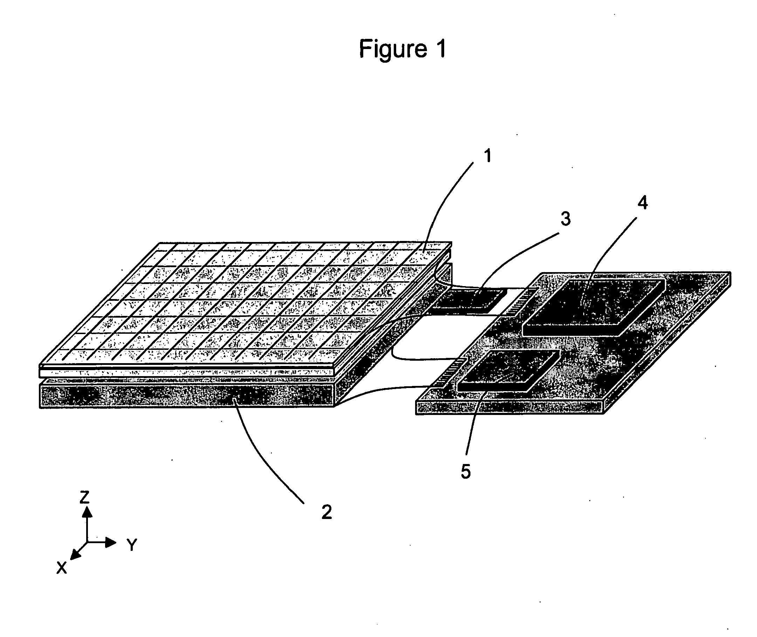

La figure 1 représente une vue d'un dispositif électronique tactile comprenant :
- un capteur tactile matriciel 1,
- un écran de visualisation 2,
- une interface de capture 3,
- un processeur principal 4, et
- un processeur graphique 5.

Le premier élément fondamental dudit dispositif tactile est le capteur tactile 1, nécessaire à l'acquisition - la manipulation multicontacts - à l'aide d'une interface de capture 3. Cette interface de capture 3 contient les circuits d'acquisition et d'analyse.

Ledit capteur tactile 1 est de type matriciel. Ledit capteur peut être éventuellement divisé en plusieurs parties afin d'accélérer la captation, chaque partie étant scannée simultanément.

Les données issues de l'interface de capture 3 sont transmises après filtrage, au processeur principal 4. Celui-ci exécute le programme local permettant d'associer les données de la dalle à des objets graphiques qui sont affichés sur l'écran 2 afin d'être manipulés.

Le processeur principal 4 transmet également à l'interface graphique les données à afficher sur l'écran de visualisation 2. Cette interface graphique peut en outre être piloté par un processeur graphique 5.

Le capteur tactile est commandé de la façon suivante : on alimente successivement, lors d'une première phase de balayage, les pistes d'un des réseaux et on détecte la réponse sur chacune des pistes du second réseau. On détermine en fonction de ces réponses des zones de contact qui correspondent aux noeuds dont l'état est modifié par rapport à l'état au repos. On détermine un ou plusieurs ensembles de noeuds adjacents dont l'état est modifié. Un ensemble de tels noeuds adjacents définit une zone de contact. On calcule à partir de cet ensemble de noeud une information de position qualifié au sens du présent brevet de curseur. Dans le cas de plusieurs ensembles de noeuds séparés par des zones non actives, on déterminera plusieurs curseurs indépendants pendant une même phase de balayage.

Cette information est rafraîchie périodiquement au cours de nouvelles phases de balayage.

Les curseurs sont créés, suivis ou détruits en fonction des informations obtenues au cours des balayages successifs. Le curseur est à titre d'exemple calculé par une fonction barycentre de la zone de contact.

Le principe général est de créer autant de curseurs qu'il y a de zones détectées sur le capteur tactile et de suivre leur évolution dans le temps. Lorsque l'utilisateur retire ses doigts du capteur, les curseurs associés sont détruits. De cette manière, il est possible de capter la position et l'évolution de plusieurs doigts sur le capteur tactile simultanément.

Le capteur matriciel 1 est par exemple un capteur de type résistif ou de type capacitif projeté. Il est composé de deux couches transparentes sur lesquelles sont agencées des lignes ou colonnes correspondant à des fils conducteurs. Lesdites couches forment ainsi un réseau matriciel de fils conducteurs.

Lorsque l'on veut savoir si une ligne a été mise en contact avec une colonne, déterminant un point de contact sur le capteur 1, on mesure les caractéristiques électriques - tension, capacitance ou inductance - aux bornes de chaque noeud de la matrice.

Le dispositif permet d'acquérir les données sur l'ensemble du capteur 1 avec une fréquence d'échantillonnage de l'ordre de 100 Hz, en mettant en oeuvre le capteur 1 et le circuit de commande intégré dans le processeur principal 4.

Le processeur principal 4 exécute le programme permettant d'associer les données du capteur à des objets graphiques qui sont affichés sur l'écran de visualisation 2 afin d'être manipulés.

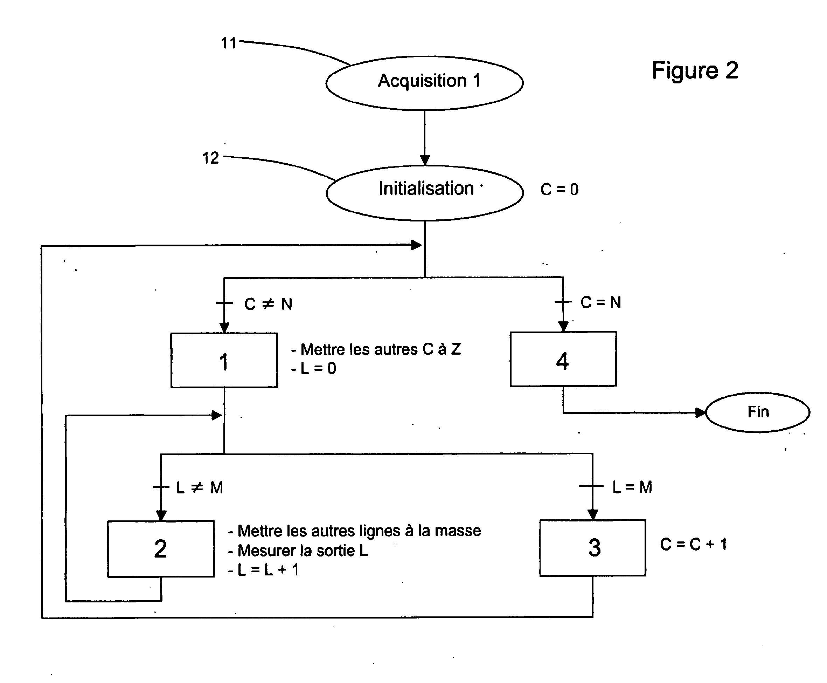

La figure 2 représente un diagramme du procédé d'acquisition des données sur la zone Z1, « acquisition 1 » 11, mis en oeuvre par le circuit électronique, conformément à l'état de la technique antérieure.

Ce procédé a pour fonction de déterminer l'état de chaque point de la zone Z1 du capteur matriciel 1, à savoir si ledit point réalise un contact ou pas. Ladite zone Z1 du capteur comprend M lignes et N colonnes, et correspond à l'ensemble du capteur.

La fréquence d'échantillonnage de la zone est de 100 Hz pour les lignes et les colonnes.

Ledit procédé correspond à la mesure de tous les noeuds de la zone de la matrice. La caractéristique électrique mesurée à chaque noeud de la matrice est par exemple la tension. Ladite matrice est une matrice [M, N] contenant à chaque point (I, J) la valeur de la tension mesurée aux bornes d'un noeud formé par l'intersection de la ligne I et de la colonne J, avec 1≤I≤M et 1≤J≤N. Ce procédé permet de donner l'état de chacun des noeud du capteur matriciel 1 à un instant donné.

Le procédé d'acquisition « acquisition 1 » 11 commence par une étape d'initialisation 12 des données obtenues lors d'une acquisition précédente.

L'axe des colonnes constitue ici l'axe d'alimentation, et l'axe des lignes celui de détection.

Le procédé 11 effectue d'abord le balayage de la première colonne. Elle est alimentée par exemple en 5 Volts. Pour ladite colonne, le circuit électronique mesure les caractéristiques électriques, par exemple la tension, aux bornes du noeud entre ladite colonne et chacune des lignes de 1 à M.

Lorsque la mesure a été effectuée auprès de la N-ième ligne, le procédé passe à la colonne suivante et recommence les mesures de tension aux bornes de chaque noeud de la nouvelle colonne considérée et de chacune des lignes de 1 à M.

Lorsque toutes les colonnes ont été balayées, les tensions aux bornes de chacun des points du capteur matriciel 1 ont été mesurées. Alors le procédé est terminé, et le circuit électronique peut procéder à l'analyse de la matrice « tension » obtenue.

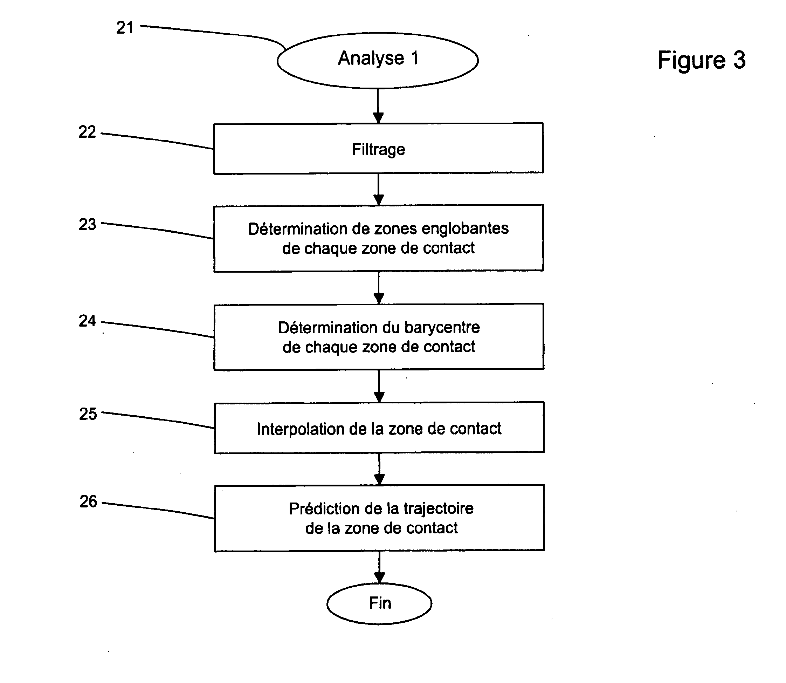

La figure 3 représente un diagramme du procédé d'analyse des données « analyse 1 » 21 mis en oeuvre par le circuit électronique, conformément à l'état de la technique antérieure.

Ledit procédé est constitué d'une série d'algorithmes réalisant les étapes suivantes :
- un ou plusieurs filtrages 22,
- la détermination 23 des zones englobantes de chaque zone de contact,
- la détermination 24 du barycentre de chaque zone de contact,

- l'interpolation 25 de la zone de contact, et
- la prédiction 26 de la trajectoire de la zone de contact.

Une fois terminé le procédé d'analyse « analyse 1 » 21, le logiciel est apte à appliquer aux objets graphiques virtuels de l'écran tactile les différents traitements spécifiques afin de rafraîchir ledit écran tactile en temps réel. Des zones englobant les zones de contact détectées lors de l'étape d'acquisition 11 des données sont également définies.

Conformément à l'état de la technique antérieure, le circuit électronique répète en boucle les procédés 11 et 21 à une fréquence de l'ordre de 100Hz. L'inconvénient d'un tel circuit électronique est le difficile arbitrage entre une surcharge de calculs, cause de surconsommations électriques, et la finesse des mesures sur les états des points de contact, résultant en un manque de fiabilité et de sensibilité de l'écran tactile.

Afin de pallier les inconvénients de l'art antérieur, le circuit électronique intègre un procédé d'asservissement conditionnel et localisé du balayage du capteur, ainsi que l'adoption de deux modes de balayages :
- un premier mode de balayage à une fréquence basse F1 et à une résolution basse R1, sur une zone Z1 du capteur, cette zone Z1 peut correspondre par exemple à l'ensemble de la surface du capteur matriciel, et
- un deuxième mode de balayage à une fréquence élevée F2 et à une résolution R2 égale ou supérieure respectivement à F1 et R1, seulement sur les zones de contact Z2, incluses dans Z1, délimitées lors de l'analyse globale consécutive au balayage de zone1 selon le premier mode de balayage.

A titre d'exemple, la fréquence basse de balayage F1 est de 20 Hertz ou moins, par exemple 1 Hertz. La fréquence élevée de balayage F2 est par exemple de 100 Hertz ou plus, par exemple 200 Hertz.

La fréquence et la résolution sont définies comme des caractéristiques de balayage.

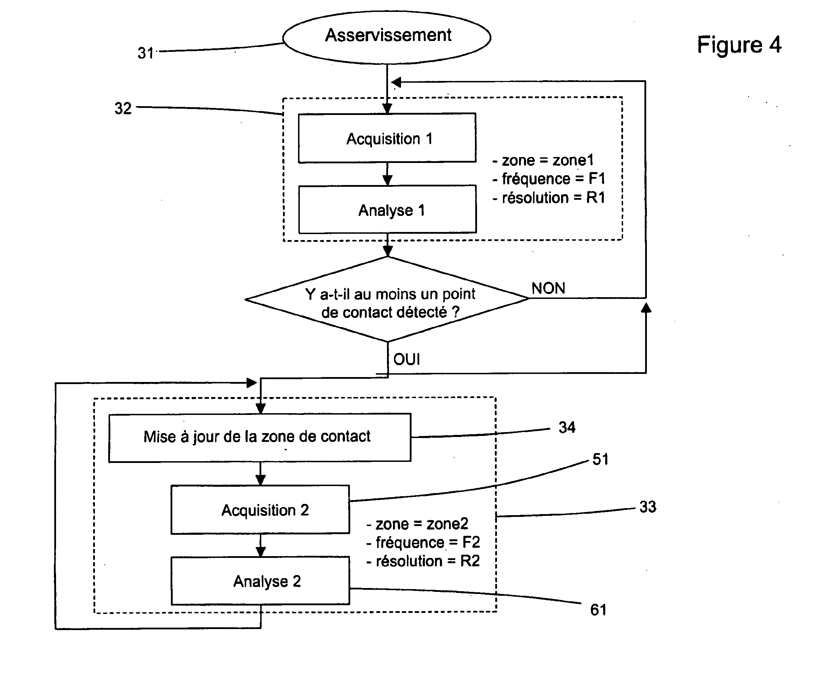

La figure 4 représente un diagramme du procédé d'asservissement conditionnel et localisé du balayage du capteur, « asservissement 1 » 31, mis en oeuvre par le circuit électronique, conformément à un example,

Ce procédé comprend une première boucle 32 correspondant à la succession des étapes 11 et 21, c'est-à-dire des étapes d'acquisition et d'analyse des données de la zone Z1 du capteur matriciel (9).

Cette première boucle (32) se réalise sur l'ensemble de la zone Z1 du capteur matriciel à une fréquence basse F1 et à une résolution basse R1.

La fréquence F1 est par exemple égale à 20 Hertz. La résolution basse R1 est quant à elle une fraction entière de la résolution du capteur matriciel. A titre d'exemple, durant cette première boucle, une ligne sur deux est alimentée et une colonne sur deux est mesurée. Dans ce cas, R1 est égale à MxN/4.

À la fin de ladite première boucle 32, un asservissement conditionnel et localisé s'opère. Si au moins un point de contact est détecté sur l'ensemble de la zone Z1, le procédé rentre dans la deuxième boucle 33 correspondant à la succession des étapes 34, 51 et 61.

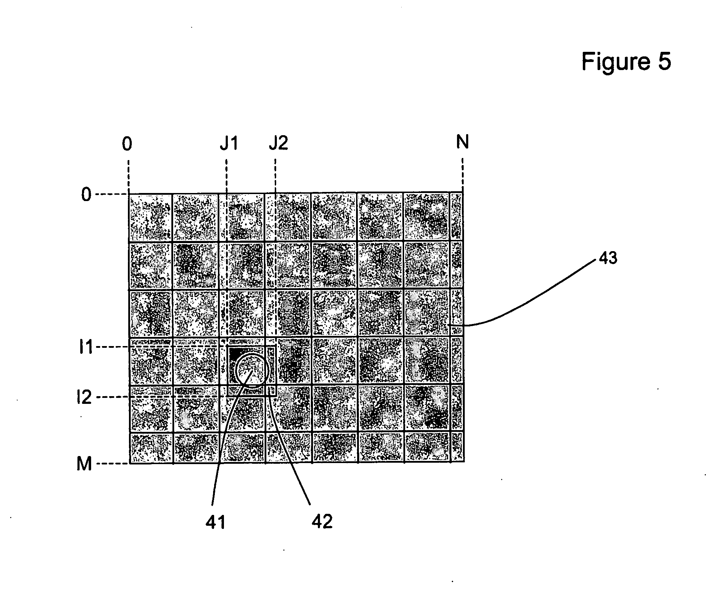

Ladite deuxième boucle 33 comprend une première étape de mise à jour 34 de la zone 42 englobant la zone de contact 41, comme illustré en figure 5. Ladite zone 42 est obtenue après analyse des données sur l'ensemble de la zone Z1 lors de l'étape d'analyse 21 de la première boucle 32.

La deuxième boucle 33 s'opère à une fréquence F2. Cette fréquence est supérieure à F1. Par exemple, elle peut être égale à 100 Hertz. La deuxième boucle 33 s'opère à une résolution R2 différente de R1. Par exemple, R2 peut être égale à la résolution du capteur matriciel. Dans ce cas, R2 est égale à MxN. Lorsqu'il n'y a plus de contact détecté dans la zone Z2, la boucle 33 s'arrête.

Durant tout le déroulement de ladite deuxième boucle 33, ladite première boucle 32 continue à s'opérer. A chaque fin de ladite première boucle 32, l'asservissement conditionnel et localisé est à nouveau mis en oeuvre. Si un nouveau point de contact est détecté la deuxième boucle 33 recommence.

Les données en sortie de l'étape d'analyse 21 permettent de connaître l'état de chacun des points du capteur 1, notamment de localiser un ou plusieurs contacts.

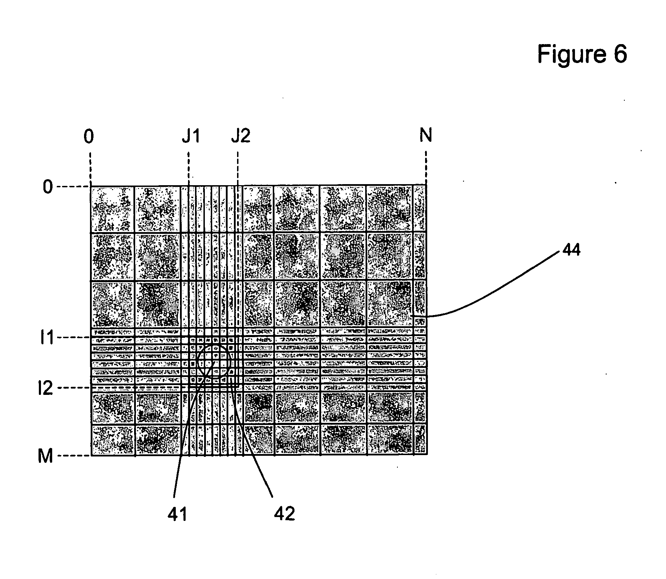

Comme illustré en figure 6, lorsqu'un objet entre en contact avec le capteur matriciel 1, une zone de contact 41 est détectée sur le capteur, après l'étape d'acquisition 11. Ladite zone 41 est ensuite traitée lors de l'étape d'analyse 21 afin de déterminer en outre une zone 42 englobant ladite zone de contact 41. La forme de ladite zone 42 est paramétrable au niveau du circuit électronique. Il peut s'agir, dans un premier exemple de mise en oeuvre de l'invention, d'une forme de type rectangulaire. Néanmoins l'invention peut être mise en oeuvre avec n'importe quel autre type de forme de la zone.

Dans le cas où le circuit électronique détecte plusieurs zones de contact 41 distinctes sur l'ensemble du capteur matriciel 1, plusieurs zones englobantes 42 sont définies.

La zone englobante 42 définit les coordonnées et le périmètre de la zone Z2 qui sera analysée lors du deuxième mode de balayage, tel que le montre la figure 6.

Les figures 5 et 6 illustrent également la différence de résolution des deux modes de balayages. La résolution R2 du balayage de la zone2 est égale à cinq fois la résolution R1 de la zone de balayage zone1. Le balayage de la zone Z1 illustré par la figure 5 se fait ainsi avec une résolution cinq fois inférieure au balayage de la zone Z2 illustré par la figure 6.

En effet, le découpage 43 de la zone Z1 tel qu'illustré sur la figure 5 est cinq fois plus grand que le découpage 44 de la zone Z2 tel qu'illustré sur la figure 6.

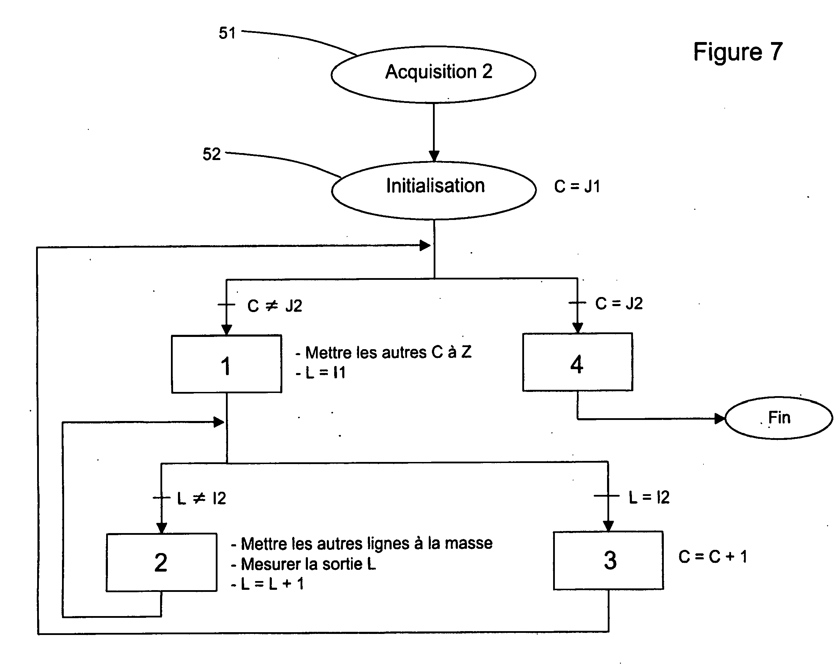

La figure 7 représente un diagramme du procédé d'acquisition des données, « acquisition 2 » 51, mis en oeuvre par le circuit électronique, conformément à un exemple,

Dans le cas présent, le procédé 51 est analogue au procédé 11 d'acquisition des données « acquisition 1 » mis en oeuvre par le circuit électronique sur l'ensemble de la zone Z1 et à la fréquence F1.

Elle diffère néanmoins en ce que l'acquisition se fait uniquement sur les zones englobants les zones de contact calculées, c'est-à-dire les zones Z2.

Dans le cas d'une seule zone détectée 41, dont la zone englobante 42 est de forme rectangulaire, le contour est défini par les paramètres entiers I1, I2, J1, J2. Le procédé 51 réalise un balayage des lignes I1 à I2, au niveau de chaque colonne de J1 à J2, de façon à mesurer la tension aux bornes de chaque point du rectangle [I1,I2,J1,J2].

L'exemple est donné pour une zone 42 de forme rectangulaire. Cette forme n'est évidemment pas limitative, étant entendu qu'il est évident pour l'homme du métier de réaliser le procédé 51 pour une zone 42 non nécessairement rectangulaire, mais de n'importe quelle autre forme.

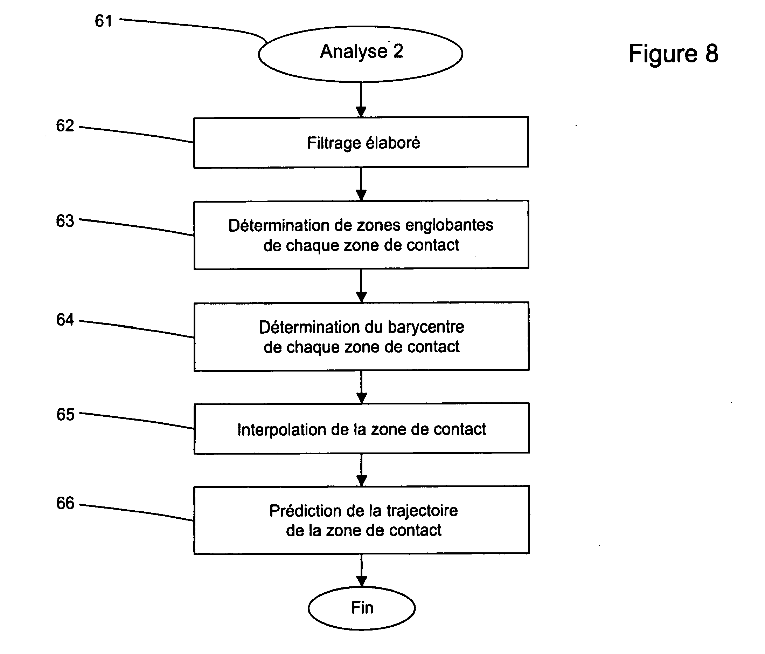

La figure 8 représente un diagramme du procédé d'analyse des données, « analyse 2 » 61, mis en oeuvre par le circuit électronique .

La zone Z2 sur laquelle s'effectue l'étape d'analyse 61 correspond à la zone 42 englobant la zone 41 décrite ci-dessus. Préférentiellement et dans la mesure où la zone Z2 est significativement plus petite que la zone Z1, le procédé d'analyse 61 met en oeuvre des filtrages plus élaborés lors de l'étape de filtrage 62 que ceux mis en oeuvre lors de l'étape de filtrage 22.

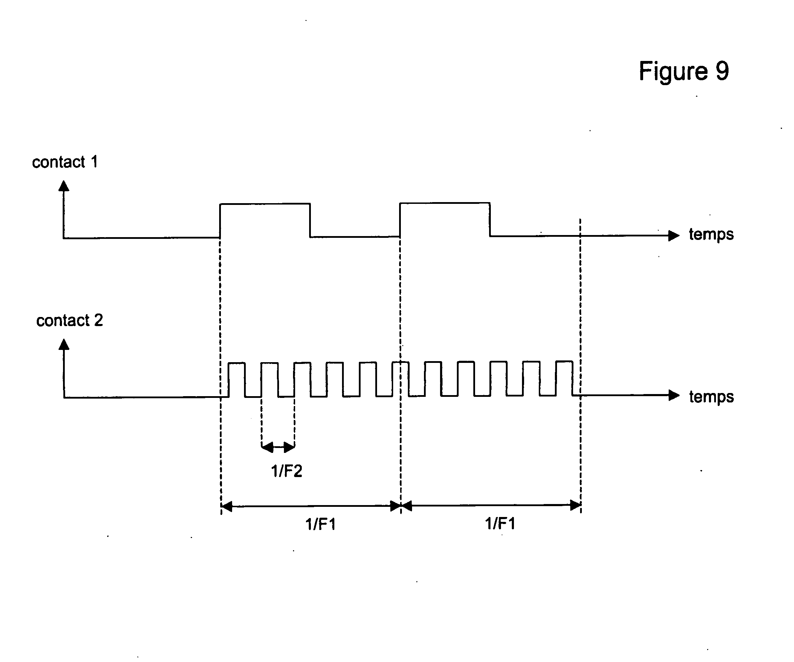

A titre illustratif, la figure 9 représente un chronogramme des deux boucles 32 et 33 mises en oeuvre lors du procédé d'asservissement conditionnel et localisé 31, dans une situation précise où un contact est détecté lors des deux premières périodes, et où aucun contact n'est détecté lors de la troisième période.

L'asservissement conditionnel et localisé 31 permet de déclencher la deuxième boucle 33 à la fréquence F2 et la résolution R2, en fonction du résultat de la détection éventuelle d'un point de contact en sortie de la première boucle 32. Ladite deuxième boucle 33 s'opère alors à la fréquence F2.

La fréquence F2 est supérieure à la fréquence F1.

La fonction « contact 1 » est définie comme la fonction susceptible de prendre deux valeurs : une valeur haute si au moins un contact est détecté sur la totalité de la surface du capteur 1 en sortie de la première boucle 32, et une valeur basse sinon. Ladite fonction « contact 1 » est remise à jour à la fin de la première bouclé 32, à la fréquence F1.

Dès que la fonction « contact 1 » passe à sa valeur haute, la deuxième boucle 33 est mise en oeuvre, à la fréquence F2. Ladite deuxième boucle 33 génère également en outre une fonction « contact 2 » analogue à ladite fonction « contact 1 », mais seulement sur la zone 42 obtenue en sortie de ladite première boucle 32 et mise à jour à l'étape 34.

Dans le présent exemple, la fonction « contact 1 » prend sa valeur haute lors des deux premières périodes. Alors la fonction « contact 2 » passe également à sa valeur haute.

Lors de la troisième période, plus aucun contact n'est détecté sur l'ensemble du capteur matriciel, donc la fonction « contact 1 » passe à sa valeur basse, et par conséquent la deuxième boucle 33 est arrêtée.

Un autre mode de réalisation de la présente invention consiste à moduler la résolution de balayage localement, en fonction des éléments graphiques affichés sur l'écran tactiles. Cette résolution de balayage réduite peut être limitée à une ou plusieurs zones où la probabilité de contact est faible, voire où on souhaite inhiber les fonctions tactiles.

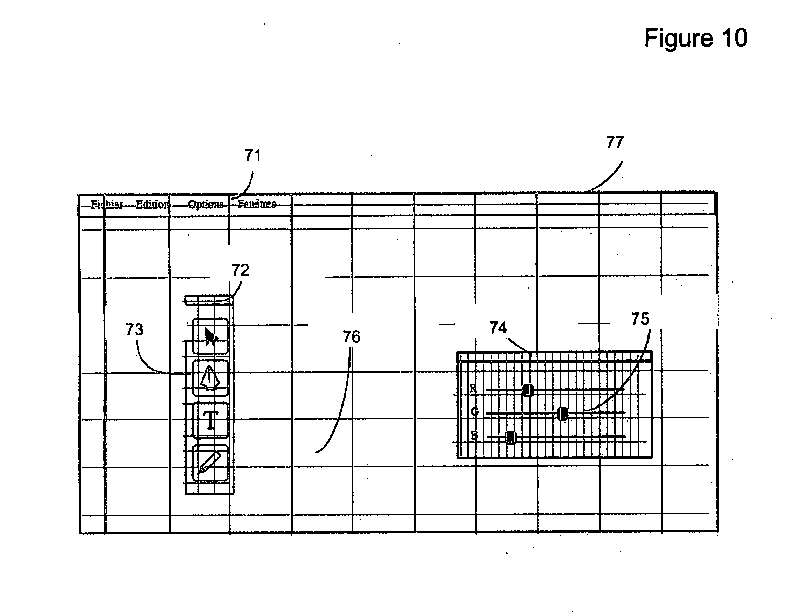

Ainsi, la figure 10 montre une interface utilisateur graphique 77 (GUI : en anglais « Graphic User Interface ») de type connu. Elle est composée d'un ensemble d'objets graphiques, les dits objets graphiques pouvant être inclus dans des sous-ensembles de l'interface graphique 77. Les dits sous-ensembles de l'interface graphique 77 sont communément appelés « fenêtres ».

Les fenêtres 71 et 74 sont ainsi des sous-ensembles de l'interface 77. Les objets 73 sont inclus dans la fenêtre 71 et les objets 75 font partie de la fenêtre 74. L'interface 77 contient également une zone tactilement neutre 76, c'est-à-dire ne contenant aucun objet graphique susceptible d'être manipulé par l'utilisateur.

Les objets contenus dans les fenêtres 71 et 74 sont de différents types. Les objets 73 sont des boutons, activés par un contact. Ils peuvent servir, par exemple, à sélectionner un outil ou une fonction. Les objets 75 sont des barres de réglages (en anglais « sliders ») destinées à être manipulées par un glissement du doigt pour modifier, par exemple, les paramètres d'un logiciel ou d'un équipement.

Ces différents types d'objets ne requièrent pas la même précision tactile. En effet, des boutons n'ont pas besoin d'une grande résolution tandis que des barres de réglage nécessitent la plus grande résolution possible, afin d'obtenir des réglages fins. Inversement, l'activation d'un bouton demande une bonne réponse temporelle tandis que le déplacement d'une barre de réglage est moins sensible à ce paramètre.

La zone neutre 76, quant à elle ne nécessite ni une haute résolution, ni une fréquence élevée. Optionnellement, elle peut ne pas être balayée.

Le quadrillage de la figure 10 montre les différents niveaux de résolution souhaités pour les différents sous-ensembles de l'interface graphique 77.

Dans ce mode de mise en oeuvre de l'invention, l'acquisition des données tactiles est améliorée et optimisée par l'adaptation de la résolution et de la fréquence de balayage en fonction de zones tactiles définies en fonction des objets graphiques correspondants.

A cet effet, le circuit de commande est asservi au processeur principal 4 afin que celui-ci puisse modifier dynamiquement les paramètres du balayage en fonction des objets graphiques affichés.

Selon un mode de réalisation particulier pour lequel fonction écriture a été activée, l'acquisition de la matrice du capteur tactile multicontacts est effectuée avec une résolution supérieure au niveau de la zone où l'écriture est détectée par la présence d'une zone de contact. Cette zone de résolution supérieure englobe une zone plus grande que celle du contact. Ainsi la résolution est augmentée dans une zone de petites dimensions autour du dernier point de contact détecté, ce qui permet d'anticiper lors de la prochaine acquisition le déplacement du stylet. On obtient donc une information tactile d'autant plus précise à proximité de la zone de contact.

Selon un mode de réalisation particulier, on réalise l'acquisition sur un objet graphique 73 ou 74 à basse fréquence et basse résolution lorsqu'il n'y a pas de contact, et, dès détection d'un contact et tant que ce contact est toujours détecté, on réalise l'acquisition sur cet objet graphique à haute fréquence et haute résolution.

Selon un mode de réalisation particulier, pour un objet graphique donné 74 ou 75, lorsqu'un contact est détecté et tant que ce contact est toujours détecté, la résolution est plus grande sur une zone proche de la zone de contact et inférieure sur une zone plus éloignée. Cela permet d'avoir une meilleure information sur le déplacement du contact lors d'un déplacement rapide de curseur.

Selon un mode de réalisation particulier, un axe - d'alimentation ou de détection - peut avoir une plus grande résolution (ou fréquence) que l'autre axe, ce qui est utile lorsque l'on analyse un déplacement de curseur de manière privilégiée suivant l'un des deux axes.

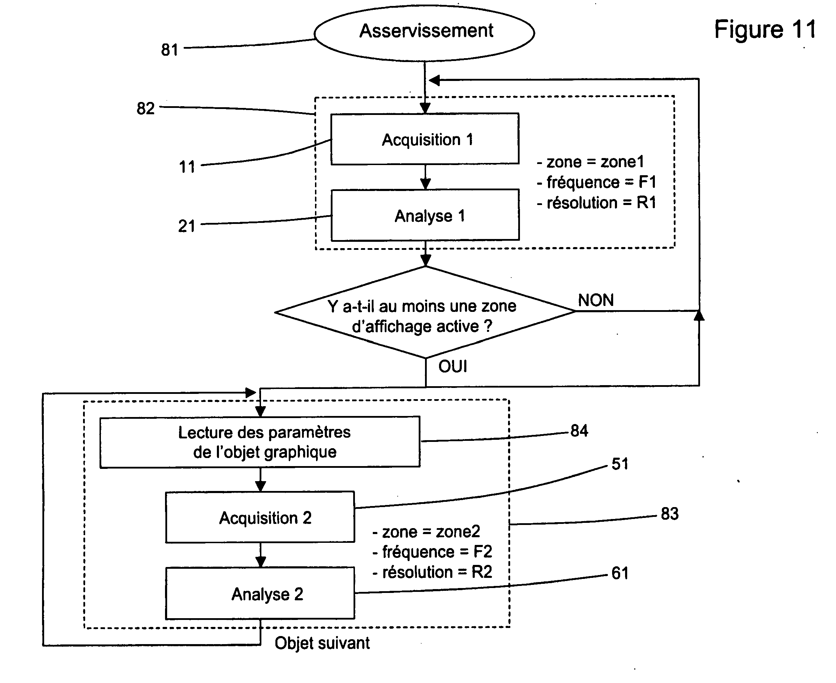

La figure 11 montre un diagramme d'asservissement, « asservissement 2 » 81, selon ce mode de mis en oeuvre. Dans une première phase de balayage 82 identique à la phase de balayage 32 décrite ci-dessus, une zone Z1 est balayée en totalité à une fréquence F1 et une résolution R1. Cette zone peut correspondre par exemple à la totalité du capteur ou encore à la totalité de l'interface graphique.

Au terme de cette phase 82, si au moins un sous-ensemble graphique (fenêtre ou objet) est affiché à l'écran, alors une deuxième boucle 83 débute.

Cette boucle 83 comporte tout d'abord une étape 84 de lecture des paramètres de l'objet graphique (position, taille, fréquence, résolution).

Les coordonnées de la zone Z2 sont définies par les coordonnées de l'objet graphique affiché à l'écran. La fréquence de balayage F2 et la résolution de balayage R2 sont définies en fonction du type de l'objet graphique (par exemple : bouton, barre de réglage, etc.).

Par exemple, pour un objet de type bouton, la fréquence F2 est réglée à 100 Hertz et la résolution R2 est de 4 colonnes par 4 lignes. De même pour un objet de type barre, la fréquence F2 sera de 60 Hertz et la résolution de 40 colonnes par 10 lignes.

Par la suite, la zone Z2 est balayée avec une fréquence F2 et une résolution R2.

Si plusieurs sous-ensembles graphiques sont affichés à l'écran, les étapes d'acquisition 51 et d'analyse 61 sont reproduites de manière similaire pour chacun d'entre eux successivement jusqu'à ce que tous aient été balayés. Une fois que toutes les zones correspondant aux objets graphiques inclus dans la zone Z1 ont été balayées, un nouveau balayage de la zone Z1 est effectué.

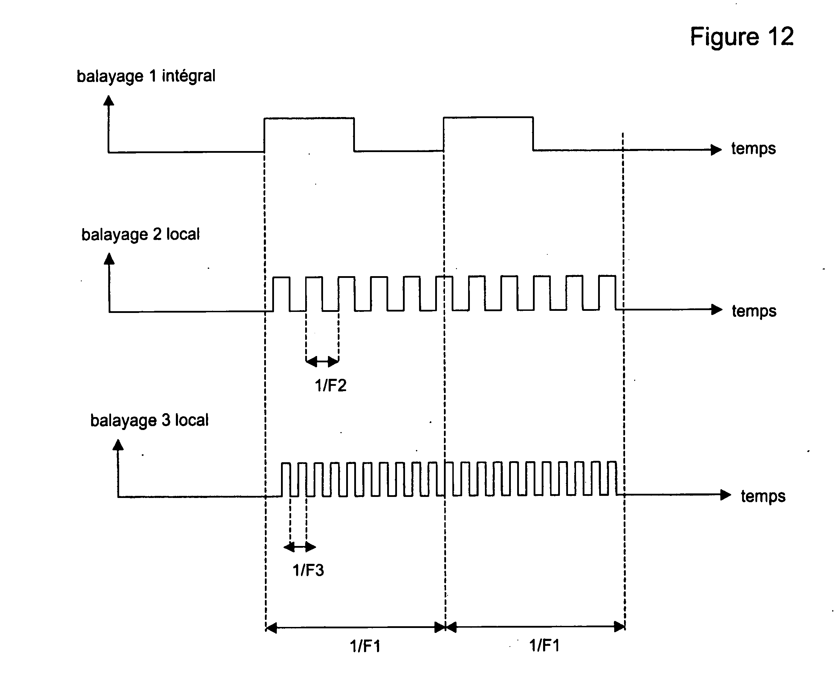

La figure 12 est un chronogramme illustrant différents balayages parallèles correspondant à différentes zones d'affichages.

L'intégralité de la zone tactile Z1 est balayée à une fréquence F1. Différents sous-ensembles de la zone tactile sont parallèlement balayés à des fréquences respectives F2 et F3. Par exemple le balayage 2 correspond à une zone où sont affichés des objets de type « glissière » (en anglais « slider »), tandis que le balayage 3 correspond à une zone où sont affichés des objets de types « boutons ».

Un écran tactile intégrant un circuit électronique d'analyse conforme à l'un quelconque des modes de réalisation précédemment décrits, présente l'avantage de ne pas nécessiter de surconsommation de courant électrique ni de mettre en oeuvre un processeur extrêmement performant, tout en fournissant une sensibilité et une finesse de détection des contacts bien supérieures à celles d'un écran tactile conforme à l'état de la technique antérieure.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

## Revendications

1. Capteur tactile à matrice passive multicontacts (1) comportant des moyens d'alimentation électrique de l'un des deux axes de la matrice, et des moyens de détection de caractéristiques électriques selon l'autre axe de la matrice, aux noeuds entre les deux axes, ledit capteur tactile étant associé à un écran de visualisation (2) affichant une interface graphique (77) composée d'un ensemble d'objets graphiques (73, 75), le capteur tactile comportant un circuit électronique d'analyse mettant en oeuvre un balayage dudit capteur tactile, dans une première phase de balayage, le balayage est effectué selon une résolution et/ou une fréquence basses de balayage sur la totalité de la surface du capteur ou la totalité de l'interface graphique (77), **caractérisé en ce que** au terme de cette première phase de balayage, lorsqu'au moins un objet graphique est affiché sur l'écran de visualisation, le balayage est effectué selon une résolution et/ou une fréquence élevées de balayage sur une zone réduite correspondant à l'emplacement dudit au moins un objet graphique (73, 75), et **en ce que** ladite première phase de balayage est à nouveau effectuée sur la totalité de la surface du capteur ou la totalité de l'interface graphique lorsque toutes les zones réduites correspondant à l'emplacement des objets graphiques affichés ont été balayées selon une résolution et/ou une fréquence élevée de balayage.

2. Capteur tactile selon la revendication 1 **caractérisé en ce que** la résolution et/ou la fréquence élevées de balayage est fonction des caractéristiques dudit objet graphique (73, 75).

## Claims

1. Passive-matrix multi-contact tactile sensor (1) comprising means for energising one of the two axes of the matrix and means for detecting electrical characteristics on the other axis of the matrix, at the nodes between the two axes, said tactile sensor being associated with a display screen (2) displaying a graphical interface (77) consisting of a set of graphical objects (73, 75), the tactile sensor comprising an electronic analysis circuit implementing a scanning of said tactile sensor, in a first scanning phase the scanning is performed according to a low scanning resolution and/or frequency over all of the surface of the sensor or all of the graphical interface (77), **characterized in that** at the end of this first scanning phase, when at least one graphical object is displayed on the display screen, the scanning is performed according to a high scanning resolution and/or frequency over a reduced area corresponding to the placement of said at least one graphical object (73, 75), and **in that** said first scanning phase is performed again over all of the surface of the sensor or all of the graphical interface when all the reduced areas corresponding to the placement of the displayed graphical objects have been scanned according to a high scanning resolution and/or frequency.

2. Tactile sensor according to claim 1, **characterized in that** the high scanning resolution and/or frequency is a function of the characteristics of said graphical object (73, 75).

## Patentansprüche

1. Taktiler Mehrkontakt-Passivmatrixsensor (1), der elektrische Versorgungsmittel von einer der zwei Achsen der Matrix und Detektionsmittel für elektrische Eigenschaften an den Knoten zwischen den zwei Achsen gemäß der anderen Achse der Matrix umfasst, wobei zu dem taktilen Sensor eine Anzeigeeinheit gehört, die eine graphische Schnittstelle (77) anzeigt, die aus einer Gruppe graphischer Objekte (73, 75) gebildet ist, wobei der taktile Sensor eine elektronische Analyseschaltung umfasst, die eine Abtastung des taktilen Sensors einsetzt, wobei in einer ersten Abtastphase die Abtastung gemäß einer niedrigen Abtastauflösung und/oder Abtastfrequenz über die gesamte Oberfläche des Sensors oder die gesamte graphische Schnittstelle (77) bewirkt wird, **dadurch gekennzeichnet, dass** nach Ablauf dieser ersten Abtastphase, wenn mindestens ein graphisches Objekt an der Anzeigeeinheit angezeigt wird, die Abtastung gemäß einer hohen Abtastauflösung und/oder Abtastfrequenz auf einer verkleinerten Zone bewirkt wird, die der Stelle des mindestens einen graphischen Objekts (73, 75) entspricht, und dass die erste Abtastphase erneut über die gesamte Oberfläche des Sensors oder die gesamte graphische Schnittstelle bewirkt wird, wenn alle verkleinerten Zonen, die der Stelle der angezeigten graphischen Objekte entsprechen, gemäß einer hohen Abtastauflösung und/oder Abtastfrequenz abgetastet worden sind.

2. Taktiler Sensor nach Anspruch 1, **dadurch gekennzeichnet, dass** die Abtastauflösung und/oder die Abtastfrequenz eine Funktion der Charakteristiken des graphischen Objekts (73, 75) ist.
